# EUROPEAN PATENT SPECIFICATION

(11) **EP 2 776 629 B1**
(45) Date of publication and mention of the grant of the patent: **23.08.2017**
(21) Application number: 12837613.4
(22) Date of filing: 05.11.2012
(51) Int. Cl.: E01C 13/08, D06N 7/00, C09J 123/06

(54) **ARTIFICIAL LAWN**
KUNSTRASEN
PELOUSE ARTIFICIELLE

(30) Priority: 04.11.2011 NL 2007720
(43) Date of publication of application: 17.09.2014
(73) Proprietor: Desso Sports Systems N.V., 9200 Dendermonde (BE)
(72) Inventor: VAN REIJEN, Peter, 5403 NK Uden (NL); LIPPENS, Jim Wim Simonne, 9100 Sint-niklaas (BE)
(74) Representative: Algemeen Octrooi- en Merkenbureau B.V.
(86) International application number: PCT/IB2012/056167
(87) International publication number: WO 2013/076608

(56) References cited:
- WO-A1-93/12285
- WO-A1-2006/131417
- WO-A1-2009/011569
- US-A- 5 104 712

## Description

The present invention relates to an artificial lawn comprising a substrate through which one or more synthetic fibres are attached, wherein a part of said one or more synthetic fibres projects from the substrate, forming a base on which the artificial lawn can be played, and another part of said one or more synthetic fibres faces away from the substrate.

Such a type of artificial grass is known per se from European patent 0 996 781 granted to the present applicant, in which a yarn containing polyamide is used for producing artificial grass, wherein said yarn, as an addition to polyamide, also contains a polyolefin compound selected from the group consisting of polypropylene, LLDPE and a block copolymer of polypropylene and polyethylene. Besides the method for manufacturing a yarn that is known therefrom, in which the polymer is extruded to form monofilaments, which are subsequently further processed into bands, with several bands being twined to form a yarn, said document also discloses a method in which the yarn is obtained by co-extrusion. During such a co-extrusion, the cladding consists of polyamide, whilst the core consists of one of the aforesaid plastics.

From International application WO 2004/106601 there is known a yarn for an artificial lawn wherein the yarn is a so-called taper filament consisting of a core layer and two outer layers of a material different from that of the core layer, wherein the core layer contains polyester and/or polyolefin material and the outer layers contain high-density polyethylene.

Japanese patent publication JP 2003 342848 discloses a yarn for an artificial lawn that consists of a conjugate yarn composed of a resin composition comprising 70-99 wt.% of nylon (polyamide) and 1-30 wt.% of polyethylene as the inner layer and polyethylene as the outer layer.

From Dutch patent NL 1021171 there is known an artificial lawn made up of a relatively hard base layer, on which a flat layer of a resilient and/or damping material is arranged, which layer may have a thickness of about 10 - 14 mm. Arranged on top of said resilient and/or damping layer is a top layer in the form of a synthetic turf consisting of a backing layer and artificial grass stalks attached thereto by tufting, knitting or weaving. The resilient and/or damping layer may be formed in various ways, for example by starting from a mixture of rubber granules mixed with a liquid binder, for example polyurethane.

A substructure for playing golf is known per se from British patent publication GB 2 072 022.

International application WO 2006/007862 further discloses a base for a sports floor.

From Dutch patent No. 1013987 there is furthermore known a base provided on a foundation layer for a sports field that is at least partially covered with natural grass, which base in part consists of rock wool.

Dutch patent No. 1016193 discloses an artificial lawn comprising a drainage layer made up of pebbles, a base layer arranged on top of said drainage layer, which base layer comprises the originally dug-off and subsequently removed soil, and a top layer with fibres present therein.

From WO 2006/131417 (published as US 2008/0213515) there is known an artificial lawn in which a hot melt is used for fixing the arms, which hot melt may comprise polyethylene.

Such use of a hot melt in an artificial lawn is also disclosed in US 5 104 712.

From WO 2009/011569 there is known the use of a hot melt in which a glue is used which fixes the fibres to a tufting fabric, the exact composition of which glue is not mentioned.

From WO 93/12285 there is known a construction of synthetic fibres in which a hot melt is used for fixing polypropylene yarn in a substrate.

A well-known phenomenon that occurs with artificial grass, especially if the artificial grass is used for playing soccer, is the fact that players sustain burns when making sliding tackles. This problem does not occur with natural grass, which natural material has a high water content and which is soft to the touch, so that friction with the skin will be high. This high friction is disadvantageous from the viewpoint of skin damage, but because of the fact that natural grass will slightly wear off upon contact, burns do not occur upon contact with natural grass. In addition to that it can be noted that natural grass is soft and, after wearing off, will grow again, in which connection it can moreover be noted that the relatively soft nature of natural grass also contributes to good properties of resilience.

On the other hand, a controversy generally occurs in the selection of the materials used for artificial grass. The material used for the artificial grass is for example a soft material which exhibits a large elastic range. Such a property results in a good resilience, but also a high degree of friction, which latter aspect will lead to excessive adherence of the skin to the artificial grass upon making sliding tackles, and thus inevitably to skin damage, which is undesirable. Said materials are evaluated as poor as regards heat development upon making such sliding tackles, in spite of the fact that because of the high degree of friction the contact time between the skin and the artificial grass remains limited. The material used for the artificial grass may also be a hard material that exhibits a small elastic range, which results in poor properties of resilience but limited friction. In addition to that, said hard materials are evaluated as good as regards heat development upon making sliding tackles, because the contact time is longer.

It is an object of the present invention to provide a special type of artificial grass which imitates the advantageous properties of natural grass, in particular as regards resilience and sliding tackles, as much as possible.

Another object of the present invention is to provide an artificial grass which exhibits a high degree of durability and which can be composed of commercially available materials.

Yet another object of the present invention is to provide an artificial lawn wherein the artificial lawn, which is made up of various components, can be recycled, wherein in particular the chemical origin of the individual components is substantially identical.

The artificial lawn as described in the introduction is characterised in that the part of said one or more synthetic fibres that faces away from the substrate is embedded in a hot melt.

The use of a hot melt provides a solid anchoring of the synthetic fibres in the substrate. Such anchoring is desirable in order to ensure when playing on an artificial lawn, for example soccer or field hockey, that the fibres extending upward from the substrate are held in place in the substrate. Such anchoring is in particular desirable for reasons of durability and playability.

The term "synthetic fibres" as used herein is to be understood to mean artificial grass fibres, which fibres must not be confused with synthetic fibres that are used for other purposes, for example for clothing and (seating) furniture. The demands to be made of artificial grass fibres are essentially different from the demands made of synthetic fibres for the aforesaid uses.

In a special embodiment it is in particular desirable that hot melt be provided with a foil on the side remote from the synthetic fibres. The use of a foil or gauze ensures that the underlying layers are held together whilst it also provides protection for the hot melt layer against the environment, so that a compact artificial lawn is obtained which consists of, in succession, synthetic fibres, substrate, hot melt and finally the foil. The thickness of the foil preferably ranges between 10 - 1500 µm, preferably between 60 - 150 µm. The foil may consist of one or more layers of virgin or recycled material. According to the present invention, a hot melt based on polyethylene is used as the hot melt, it is in particular desirable to use hot melt based on a mixture of various polyethylene fractions. According to the invention, a mixture of a low-melting polyethylene fraction and a high-melting polyethylene fraction is used, whereby the low-melting polyethylene fraction exhibits a melting range of 40 - 140 °C and the high-melting polyethylene fraction exhibits a melting range of 90 - 130 °C. Such a combination of melting fractions provides a good fibre binding between the filaments and tuft locking and prevents undesirable detachment or shifting of the synthetic fibres in the case of high temperatures during summery periods, when temperatures as high as 50 °C can be reached in the artificial lawn. In addition, the use of the aforesaid hot melt, which can be regarded as a hot melt based on a mixture of different polyethylene fractions, in the process for producing the artificial lawn is very advantageous. The temperatures that occur during said process may lead to artificial grass fibres being burned and becoming detached, which is undesirable. The use of the present hot melt has surprisingly led to a reduction or elimination of the aforesaid problems.

The amount of low-melting polyethylene fraction in the hot melt preferably ranges between 1 - 99%, and the amount of high-melting polyethylene fraction preferably ranges between 99 - 1%, based on the weight of the hot melt; the amount of low-melting polyethylene fraction in the hot melt in particular ranges between 20 - 80%, whilst the amount of high-melting polyethylene fraction ranges between 80 - 20%, based on the weight of the hot melt. Examples of suitable high-melting polyethylene fractions are selected from the group consisting of recycled polyethylene yarns obtained from an extrusion process, polyethylene yarns obtained from a recycled artificial grass sports field, and non-recycled polyethylene yarns or pure polyethylene or polypropylene powder, or a combination thereof. A selection of hot melt such as the present is in particular desirable from the viewpoint of pile attachment at high temperatures. In one embodiment, the applied amount of hot melt preferably ranges between 50 - 1500 g/m2, preferably between 150 - 350 g/m2. The hot melt to be used in the present application is preferably to be regarded as a mixture of the aforesaid polyethylene fractions, in which one or more usual additives, such as viscosity control agents or components obtained from polymer synthesis, may furthermore be present; the aforesaid additives well be used in very small amounts, however, in particular in amounts of < 10 wt.%, preferably < 5 wt.%, in particular < 1 wt.%, based on the total weight of the hot melt.

The substrate used in the present artificial lawn is preferably composed of one or more polyolefin compounds, in which connection in particular polyethylene and/or polypropylene are mentioned. Also separable polyester- and/or glass constructions are possible. LLDPE, LDPE, HDPE and also (block) copolymers of polyethylene compounds and polypropylene compounds are used as suitable polyethylene compounds. In the present description the term "polyethylene" is consistently used, which term is understood to comprise the aforesaid polyethylene compounds.

In one embodiment, a filling layer composed of a granulate is preferably present between the hot melt and the foil, which granulate comprises recycled or non-recycled or pure polyethylene or polypropylene powder. The filling layer is preferably applied in an amount ranging between 50 - 1500 g/m2. The filling layer provides the artificial lawn with a basic weight that suffices for facilitating the construction of the field. The presence of the filling layer is in particular desirable in order to reduce the occurrence of "curling" or "rolling up" of the foil construction, which is desirable when individuals strip of artificial lawn are laid/glued against each other.

To produce an artificial lawn made up of individual components whose chemical origin is practically identical, it is desirable if the substrate is made of a polyethylene compound. The one or more synthetic fibres are made of polyethylene.

In a special embodiment, the foil used in the present artificial lawn also comprises recycled polyethylene compound, in which case it is desirable to use a foil made up of at least 90 wt.% recycled polyethylene waste.

The synthetic fibre used in the present artificial lawn is a monofilament obtained by extrusion, whilst in a special embodiment it is also possible to twine the monofilaments so as to thus obtain a bundle of fibres, or to bundle said fibres by means of wrap yarn.

The present invention will now be explained by means of a number of examples, in which regard it should in particular be noted that the present invention is by no means limited to such a special example.

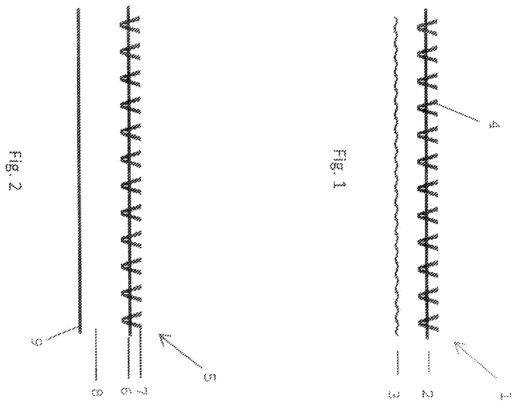

Figure 1 schematically shows a prior art artificial lawn 1 comprising a primary backing 2, in which synthetic fibres 4 are present, which synthetic fibres 4 are anchored in the primary backing 2 by means of a latex layer or back 3. The primary backing 2 is mainly made of polypropylene, possibly provided with one or more additional layers, warp or weft, possibly of polyester. The latex back being used has a weight of 800 - 1200 g/m2. The drawback of such a construction of the artificial lawn 1 is that several waste flows are created upon recycling, which waste flows are different in chemical origin. This means that such an artificial lawn 1 cannot be fully recycled.
Figure 2 shows an artificial lawn 5 according to the present invention, which consists of a substrate 6 in which a fibres 7 are present, which fibres 7 are durably anchored therein, using a hot melt 8, which hot melt 8 is screened by a foil 9 on the underside thereof. A filling layer (not shown) may be present between the hot melt 8 and the foil 9. In a special embodiment, the synthetic fibres 7, the substrate 6, the hot melt 8 as well as the foil 9, and a filling layer that may be present, are preferably made of the same chemical composition, preferably polyethylene. If the aforesaid individual components are all made of polyethylene, full recycling of the artificial lawn 5 will be possible. In a specific embodiment it is also possible, however, to produce the fibres 7, the hot melt 8 and the foil 9 of polyethylene, whilst the substrate 6 is composed of polypropylene or polyester, for example, providing that the non-polyethylene fraction can be separated. Thus, two waste flows are formed when such an artificial lawn 5 is recycled, a first waste flow consisting of polypropylene or polyester and a second waste flow consisting of polyethylene, which waste flows can subsequently be further processed as separate flows. Because the substrate 6 can be separated separate from the fibres 7, the hot melt 8 and the foil 9, it is therefore possible to further process polyethylene-containing materials separately. In a special embodiment of the present application, the amount of recycled polyethylene in the present artificial lawn is preferably at least 75 wt.%, preferably at least 90 wt.%, based on the total weight of the artificial lawn, comprising the substrate, the artificial grass fibres present therein, the hot melt and the foil (and possibly the filling layer).

The present artificial lawn can be obtained by tufting synthetic fibres through a substrate, using a usual method, wherein the fibres, which are present on the underside of the carrier, viz. remote from the side on which the artificial lawn will be played, are additionally subjected to a melting operation, so that some degree of sticking together between the filaments will occur. The fabric or substrate thus tufted is covered, preferably sprinkled, with a hot melt, preferably in the form of a powder, after which the foil is contacted with the assembly of tufted substrate and hot melt via a rolling step, whereupon the intended artificial lawn is obtained through heating and compression. A filling layer may additionally be applied to the hot melt so as to thus position the filling layer between the foil and the hot melt.

The materials used as a hot melts may furthermore be provided with additives, such as Fischer-Tropsch waxes, stabilisers, adhesiveness enhancers, anti-oxidants, fillers such as talk, chalk, wollastonite and the like. Typical values for the melting temperature are 80°C for the low-melting fraction (densities preferably 0.870 - 0.940 g/m3) and higher than 100 °C, for example 110 °C, for the high-melting fraction (densities preferably 0.867 - 0.970 g/m3).

## Claims

1. An artificial lawn (5) comprising a substrate (6) through which one or more synthetic fibres (7) are attached, wherein a part of said one or more synthetic fibres (7) projects from the substrate (6), forming a base on which the artificial lawn can be played, and another part of said one or more synthetic fibres (7) faces away from the substrate (6), wherein the part of said one or more synthetic fibres (7) that faces away from the substrate (6) is embedded in a hot melt (8), **characterised in that** the hot melt (8) comprises a mixture of low-melting polyethylene fraction and a high-melting polyethylene fraction, wherein the low-melting polyethylene fraction exhibits a melting range of 40 - 140 °C and the high-melting polyethylene fraction exhibits a melting range of 90 - 130 °C, wherein said substrate (6) and the one or more synthetic fibres are made of polyethylene.

2. An artificial lawn (5) according to claim 1, **characterised in that** the hot melt (8) is provided with a foil (9) on the side remote from the synthetic fibres (7).

3. An artificial lawn (5) according to one or more of claims 1-2, **characterised in that** the amount of low-melting polyethylene fraction in the hot melt (8) ranges between 1 - 99%, preferably between 20 - 80%, and that the amount of high-melting polyethylene fraction ranges between 99 - 1%, preferably between 80 - 20%, based on the weight of the hot melt.

4. An artificial lawn (5) according to one or more of claims 1-3, **characterised in that** the polyethylene fraction is selected from the group consisting of recycled polyethylene yarns obtained from an extrusion process, polyethylene yarns obtained from a recycled artificial grass sports field, recycled polyethylene yarns and non-recycled polyethylene yarns or pure polyethylene or polypropylene powder, or a combination thereof.

5. An artificial lawn (5) according to one or more of claims 1-4, **characterised in that** the applied amount of hot melt (8) ranges between 50 - 1500 g/m², preferably between 150 - 350 g/m².

6. An artificial lawn (5) according to one or more of claims 2-5, **characterised in that** the thickness of the foil ranges between 10 - 1500 µm, preferably between 60 - 150 µm.

7. An artificial lawn (5) according to one or more of claims 2-6, **characterised in that** a filling layer composed of a granulate is present between the hot melt (8) and the foil (9), which granulate comprises recycled or non-recycled or pure polypropylene or polyethylene powder, wherein said filling layer especially is applied in an amount ranging between 50 - 1500 g/m².

8. An artificial lawn (5) according to one or more of claims 1-7, **characterised in that** the substrate (6) is composed of one or more polyolefin compounds chosen from the group of polyethylene and polypropylene.

9. An artificial lawn (5) according to one or more of claims 2-8, **characterised in that** said foil (9) is made of polyethylene.

10. An artificial lawn (5) according to one or more of the preceding claims 2-9, **characterised in that** the substrate (6) and the foil (9) each individually comprise polyethylene.

## Patentansprüche

1. Ein Kunstrasen (5) umfassend ein Substrat (6), durch welches eine oder mehrere Synthesefasern (7) befestigt sind, wobei ein Teil dieser einen oder mehreren Synthesefasern (7) von dem Substrat (6) absteht und eine Fläche bildet, auf welcher der Kunstrasen bespielt werden kann, und ein anderer Teil dieser einen oder mehreren Synthesefasern (7) auf die andere Seite des Substrats (6) führt, wobei der Teil aus dieser/diesen einen oder mehreren Synthesefasern (7), vom Substrat (6) abgewandt ist, in eine Hei8schmelzmasse (8) eingebettet ist, **dadurch gekennzeichnet, dass** die HeiBschmelzmasse (8) ein Gemisch aus einer niedrigschmelzenden Polyethylenfraktion und einer hochschmelzenden Polyethylenfraktion umfasst, wobei die niedrigschmelzende Polyethylenfraktion einen Schmelzbereich von 40 bis 140 °C aufweist und die hochschmelzende Polyethylenfraktion einen Schmelzbereich von 90 bis 130 °C aufweist, wobei das Substrat (6) und die eine oder mehreren Synthesefasern aus Polyethylen hergestellt sind.

2. Ein Kunstrasen (5) nach Anspruch 1, **dadurch gekennzeichnet, dass** die HeiBschmelzmasse (8) auf der von den Synthesefasern (7) abgewandten Seite mit einer Folie (9) versehen ist.

3. Ein Kunstrasen (5) nach einem oder mehreren der Ansprüche 1 und 2, **dadurch gekennzeichnet, dass** der Anteil der niedrigschmelzenden Polyethylenfraktion an der HeiBschmelzmasse (8) zwischen 1 und 99 %, vorzugsweise zwischen 20 und 80 %, und der Anteil der hochschmelzenden Polyethylenfraktion zwischen 99 und 1 %, vorzugsweise zwischen 80 und 20 %, bezogen auf das Gewicht der HeiBschmelzmasse, beträgt.

4. Ein Kunstrasen (5) nach einem oder mehreren der Ansprüche 1 bis 3, **dadurch gekennzeichnet, dass** die Polyethylenfraktion aus der Gruppe ausgewählt ist, die aus wiederverwerteten aus einem Extrudiervorgang erhaltenen Polyethylengarnen, aus einem wiederverwerteten Kunstrasen für Sportfelder erhaltenen Polyethylengarnen, wiederverwerteten Polyethylengarnen und nicht wiederverwerteten Polyethylengarnen oder reinem Polyethylen- oder Polypropylenpulver oder einer Kombination davon besteht.

5. Ein Kunstrasen (5) nach einem oder mehreren der Ansprüche 1 bis 4, **dadurch gekennzeichnet, dass** die Menge der aufgebrachten HeiBschmelzmasse (8) zwischen 50 und 1 500 g/m², vorzugsweise zwischen 150 und 350 g/m², beträgt.

6. Ein Kunstrasen (5) nach einem oder mehreren der Ansprüche 2 bis 5, **dadurch gekennzeichnet, dass** die Dicke der Folie zwischen 10 und 1500 µm, vorzugsweise zwischen 60 und 150 µm, beträgt.

7. Ein Kunstrasen (5) nach einem oder mehreren der Ansprüche 2 bis 6, **dadurch gekennzeichnet, dass** zwischen der HeiBschmelzmasse (8) und der Folie (9) eine aus einem Granulat aufgebaute Füllschicht vorhanden ist, wobei das Granulat wiederverwertetes oder nicht wiederverwertetes oder reines Polypropylen- oder Polyethylenpulver umfasst, wobei diese Füllschicht insbesondere mit einer Menge von zwischen 50 und 1500 g/m² aufgebracht worden ist.

8. Ein Kunstrasen (5) nach einem oder mehreren der Ansprüche 1 bis 7, **dadurch gekennzeichnet, dass** das Substrat (6) aus einer oder mehreren Polyolefinverbindungen aufgebaut ist, die aus der aus Polyethylen und Polypropylen bestehenden Gruppe ausgewählt sind.

9. Ein Kunstrasen (5) nach einem oder mehreren der Ansprüche 2 bis 8, **dadurch gekennzeichnet, dass** die Folie (9) aus Polyethylen hergestellt ist.

10. Ein Kunstrasen (5) nach einem oder mehreren der Ansprüche 2 bis 9, **dadurch gekennzeichnet, dass** das Substrat (6) und die Folie (9) jede/s einzeln Polyethylen umfassen.

## Revendications

1. Pelouse artificielle (5) comprenant un substrat (6) par lequel une ou plusieurs fibre(s) synthétique(s) (7) est/sont attachée(s), où une partie de ladite ou desdites plusieurs fibre(s) synthétique(s) (7) fait saillie à partir du substrat (6), formant une base sur laquelle on peut jouer sur la pelouse artificielle, et une autre partie de ladite ou desdites plusieurs fibre(s) synthétique(s) (7) est opposée au substrat (6), où la partie de ladite ou desdites plusieurs fibre(s) synthétique(s) (7) qui est opposée au substrat (6) est incorporée dans une masse fondue à chaud (8), **caractérisée en ce que** la masse fondue à chaud (8) comprend un mélange d'une fraction de polyéthylène à bas point de fusion et d'une fraction de polyéthylène à point de fusion élevé, où la fraction de polyéthylène à bas point de fusion présente une plage de fusion allant de 40 à 140°C et la fraction de polyéthylène à point de fusion élevé présente une plage de fusion allant de 90 à 130°C, où ledit substrat (6) et la ou les plusieurs fibre(s) synthétique(s) sont réalisés en polyéthylène.

2. Pelouse artificielle (5) selon la revendication 1, **caractérisée en ce que** la masse fondue à chaud (8) est pourvue d'une feuille (9) sur le côté éloigné des fibres synthétiques (7).

3. Pelouse artificielle (5) selon l'une et/ou l'autre des revendications 1 et 2, **caractérisée en ce que** la quantité de fraction de polyéthylène à bas point de fusion dans la masse fondue à chaud (8) se trouve dans une plage allant de 1 à 99%, de préférence de 20 à 80%, et **en ce que** la quantité de fraction de polyéthylène à point de fusion élevé se trouve dans une plage allant de 99 à 1%, de préférence de 80 à 20%, par rapport au poids de la masse fondue à chaud.

4. Pelouse artificielle (5) selon une ou plusieurs des revendications 1 à 3, **caractérisée en ce que** la fraction de polyéthylène est choisie dans le groupe constitué de fils de polyéthylène recyclé obtenus par un procédé d'extrusion, de fils de polyéthylène obtenus à partir d'un terrain de sport en gazon artificiel recyclé, de fils de polyéthylène recyclé et de fils de polyéthylène non recyclé ou d'une poudre de polyéthylène ou de polypropylène pur ou d'une combinaison de ceux-ci.

5. Pelouse artificielle (5) selon une ou plusieurs des revendications 1 à 4, **caractérisée en ce que** la quantité appliquée de la masse fondue à chaud (8) se trouve dans une plage allant de 50 à 1500 g/m², de préférence de 150 à 350 g/m².

6. Pelouse artificielle (5) selon une ou plusieurs des revendications 2 à 5, **caractérisée en ce que** l'épaisseur de la feuille se trouve dans une plage allant de 10 à 1500 µm, de préférence de 60 à 150 µm.

7. Pelouse artificielle (5) selon une ou plusieurs des revendications 2 à 6, **caractérisée en ce qu'**une couche de remplissage composée d'un granulé est présente entre la masse fondue à chaud (8) et la feuille (9),
lequel granulé comprend une poudre de polyéthylène ou de polypropylène recyclé ou non recyclé ou pur, où ladite couche de remplissage est particulièrement appliquée en une quantité se trouvant dans une plage allant de 50 à 1500 g/m².

8. Pelouse artificielle (5) selon une ou plusieurs des revendications 1 à 7, **caractérisée en ce que** le substrat (6) est composé d'un ou de plusieurs composé(s) de polyoléfine choisi(s) dans le groupe de polyéthylène et de polypropylène.

9. Pelouse artificielle (5) selon une ou plusieurs des revendications 2 à 8, **caractérisée en ce que** ladite feuille (9) est réalisée en polyéthylène.

10. Pelouse artificielle (5) selon une ou plusieurs des revendications précédentes 2 à 9, **caractérisée en ce que** le substrat (6) et la feuille (9) comprennent chacun individuellement du polyéthylène.
